# EUROPÄISCHE PATENTSCHRIFT

(11) **EP 2 662 134 B1**
(45) Veröffentlichungstag und Bekanntmachung des Hinweises auf die Patenterteilung: **11.07.2018**
(21) Anmeldenummer: 13002452.4
(22) Anmeldetag: 08.05.2013
(51) Int. Cl.: A01N 25/28, B01J 13/14, C09D 7/12, A62D 1/00, C11D 3/50

(54) **Neue transparente Beschichtungen mit selbstheilenden Eigenschaften**
Novel transparent coatings with self-healing properties
Nouveaux revêtements transparents dotés de propriétés auto-cicatrisantes

(30) Priorität: 10.05.2012 DE 102012009181
(43) Veröffentlichungstag der Anmeldung: 13.11.2013
(73) Patentinhaber: Fraunhofer-Gesellschaft zur Förderung der angewandten Forschung e.V., 80686 München (DE); Adler-Werk Lackfabrik Johann Berghofer GmbH & Co KG, 6130 Schwaz (AT)
(72) Erfinder: Scharf, Sabine, 28329 Bremen (DE); Eiben, Kerstin, 27339 Riede (DE); Nieradzik, Jill, D-28217 Bremen (DE); Rössler, Albert, 6020 Innsbruck (AT); Jochum, Wilfrid, 6130 Schwaz (AT)
(74) Vertreter: Eisenführ Speiser

(56) Entgegenhaltungen:
- EP-A1- 2 364 773
- DE-A1- 10 044 635
- US-A- 4 001 140
- US-A- 4 301 054
- US-A- 4 337 169
- SURYANARAYANA C ET AL: "Preparation and characterization of microcapsules containing linseed oil and its use in self-healing coatings", PROGRESS IN ORGANIC COATINGS, ELSEVIER BV, NL, Bd. 63, Nr. 1, 2. Juli 2008 (2008-07-02), Seiten 72-78, XP022820418, ISSN: 0300-9440, DOI: 10.1016/J.PORGCOAT.2008.04.008 [gefunden am 2008-06-16]
- BLAISZIK B J ET AL: "Microcapsules filled with reactive solutions for self-healing materials", POLYMER, ELSEVIER SCIENCE PUBLISHERS B.V, GB, Bd. 50, Nr. 4, 9. Februar 2009 (2009-02-09), Seiten 990-997, XP025909647, ISSN: 0032-3861, DOI: 10.1016/J.POLYMER.2008.12.040 [gefunden am 2008-12-27]

## Beschreibung

Die Erfindung betrifft transparente Mikrokapseln und Mikrokapseldispersionen, hergestellt durch Polykondensation einer Aldehydkomponente mit einer Aminokomponente und einem aromatischen Alkohol.

Die Beschichtung von Werkstoffen, etwa Holz, Metall, Kunststoff mit Anstrichstoffen ist seit langem bekannt. Durch die Beschichtung wird das beschichtete Material vor Umwelteinflüssen geschützt und im Idealfall zusätzlich dekoriert. In aller Regel unterliegen solche Beschichtungen einer Alterung, die meist durch Umwelteinflüsse wie Licht, mechanische Belastungen, Wärme, Kälte, Temperaturwechsel, Feuchtigkeit oder Schadstoffe hervorgerufen wird. In der Folge kommt es oft zur Bildung von Rissen oder Poren in der Beschichtung. Dadurch wird die zuvor geschützte Oberfläche des beschichteten Materials selbst den Umwelteinflüssen ausgesetzt. Oft wird die Beschichtung von den Rissen oder Poren ausgehend weiter geschädigt und es kommt zur Vergrößerung der Beschädigung bis zur teilweisen Ablösung der Beschichtung. So geschädigte Beschichtungen müssen ganz oder teilweise entfernt werden, um eine neue Beschichtung aufzutragen.

Es hat nicht an Versuchen gefehlt die für die Dauerhaftigkeit der Beschichtung bedeutsamen Eigenschaften solcher Beschichtungen zu verbessern, also ihre Lichtbeständigkeit, Schlagfestigkeit, Temperatur- bzw.

Temperaturwechselbeständigkeit und so fort zu verbessern.

Der Gegenstand der vorliegenden Erfindung stellt einen anderen Weg dar, um die Dauerhaftigkeit von Beschichtungen zu verbessern: Er verleiht der Beschichtung selbstheilende Eigenschaften. Dadurch verschließen sich auf welche Weise auch immer entstandene Risse und/oder Poren der Beschichtung weitgehend selbsttätig.

Dieses Konzept an sich ist nicht neu:
So wird von Fahrzeuglacken berichtet, bei denen Kratzer durch UV-Licht-Einfluss verfüllt werden, indem das UV-Licht zu einem punktuellen Schmelzvorgang des verwendeten metallosupramolekularen Polymers führt und das geschmolzene Material den Kratzer verfüllt.

Ein anderer Ansatz wird von S.R. White et al. in "Autonomie healing of polymer composites"; Nature 409 (2001), offenbart. Dieser benutzt mit einem reaktionsfähigen flüssigen Monomer gefüllte Mikrokapseln und einen in die Beschichtung selbst eingebetteten Katalysator. Bei einer Beschädigung der Beschichtung tritt das Monomer durch die Kapillarwirkung des Risses in die Schadstelle aus und reagiert unter dem Einfluss eines Katalysators unter Bildung einer Feuchtigkeit abweisenden Polymermasse. Allerdings sind solche Beschichtungen durch die enthaltenen Mikrokapseln verhältnismäßig rau.

M.R. Kessler offenbart in "Characterization and performance of a self-healing composite material"; PhD-Thesis University of Illinois (2002), eine Variante davon, bei der als Monomer Dicyclopentadien (DCPD) verwendet wird. Dieses reagiert nach Austritt aus der beschädigten Mikrokapsel in Anwesenheit eines in der

Beschichtung verteilten Grubbs-Katalysators nach einem Ringöffnungsmechanismus. Der Grubbs-Katalysator reagiert mit Luftsauerstoff und muss daher unter Schutzatmosphäre verarbeitet werden. Zudem ist er violett gefärbt. J.D. Rule et al. offenbaren in Educ. Chem., 42(5), 130-132 (2005), weitere Details zu solchen Systemen. E.N. Brown offenbart in "Fracture and fatigue of a self-healing polymer composite material"; PhD-Thesis University of Illinois (2003), ebenfalls weitere Details zu solchen Systemen.

Tao Yin, Min Zhi Rong, Ming Qiu Zhang offenbaren in "Self-healing epoxy composites - Preparation and effect of the healant consisting of microencapsulated epoxy and latent curing agent", Composites Science and Technology 67 (2007) 201-212, Harnstoff-Formaldehyd-Kapseln, welche mit Epoxiden gefüllt sind. Näheres dazu offenbaren Li Yuan, Guozheng Liang , JianQiang Xie, Lan Li, Jing Guo in "Preparation and characterization of poly(urea-formaldehyde) microcapsules filled with epoxy resins", Polymer 47 (2006) 5338-5349.

Suryanarayana, K. Chowdoji Rao, Dhirenda Kumar offenbaren in "Preparation and characterization of microcapsules containing linseed oil and is use in self-healing coatings", Progress in Organic Coatings 63 (2008), den Einsatz von mit sikkativiertem Leinöl gefüllten Harnstoff-Formaldehyd Mikrokapseln in Epoxidharz-Korrosionsschutzlacken.

WO 2007/143475 offenbart bestimmte Verbundmaterialien, die eine Elastomermatrix sowie zwei Arten von Kapseln mit polymerisationsfähigem Material einerseits und Starter für das polymerisationsfähige Material andererseits enthalten.

US 2009/0036568 A1 offenbart bestimmte selbstheilende Materialien mit einer Matrix und darin verteilten und eingebetteten Mikrotaschen und Mikrokapseln, die jeweils flüssige selbstheilende Mittel bzw. eine die Polymerisation des flüssigen selbstheilenden Mittels ermöglichende bestimmte Katalysatorzubereitung enthalten. US 4,301,054 A offenbart thermographische Beschichtungszusammensetzungen mit Mikrokapseln, die in den Mikrokapseln cholesterische Flüssigkristalle enthalten, deren Farbeindruck temperaturabhängig grau, rot, grün oder blau ist. Diese Veröffentlichung verweist auf US 4,001,140 A, die ihrerseits ein Verkapselungsverfahren offenbart, bei dem eine in-situ-Polymerisation der Kapselwand in wässrigem Medium durchgeführt wird und deren Kapselwand aus Harnstoff-Formaldehyd-Harz besteht. Zur Durchführung dieses Verfahrens wird zunächst eine wässrige Lösung von 0,32 Gew.-% Resorcin, 3,2 Gew.-% Harnstoff und 3,2 Gew.-% EMA (Poly(ethylen-alt-maleinsäureanhydrid) hergestellt. Diese Mikrokapseln können für selbstdurchschreibende Papiere eingesetzt werden und unterscheiden sich von den erfindungsgemäß hergestellten u.a. durch einen abweichenden Anteil des hydrophoben Materials in der Reaktionsmischung, der Teilchengröße der erhaltenen Kapseln und dadurch, dass die Kapselwände nicht transparent sind.

US 4,211,668 A offenbart ein Herstellverfahren für transparente Kapselwände aus Gelatine und Sorbitol in Wasser/Methanol. Dabei wird eine Dispersion in Mineralöl hergestellt und anschließend gebrochen. Dieses Herstellverfahren stellt keine in-situ-Polymerisation dar.

US 2009/0036568 A1 offenbart einen selbstheilenden Verbundwerkstoff für im Weltraum befindliche Strukruten, enthaltend ein Heilungsmittel in in die Matrix eingebundenen Mikrokapseln und einen Katalysator, der in anderen, in die Matrix eingebetteten Mikrokapseln enthalten ist. Das Herstellverfahren macht von Ethylmethacrylat Gebrauch. Eine Emulgatormischung wird nicht verwendet.

Weiterer Stand der Technik findet sich in WO 2002/064653 A2, WO 2007/082153 A2., B.J. Blaiszik et al., "Microcapsules filled with reactive solutions for self-healing materials", Polymer 50 (2009) 990-997 und Michael W. Keller, Scott R. White, and Nancy R. Sottos, "A Self-Healing Poly(Dimethyl Siloxane) Elastomer", Adv. Funct. Mater. 2007, 17, 2399-2404.

All dies ermöglichte es bisher nicht, in befriedigender Weise transparente selbstheilende Lacke herzustellen. Stets waren entweder Komponenten, Reaktionsprodukte oder die Kapseln selbst gefärbt oder intransparent. Wünschenswert war es weiterhin, ohne den Einsatz von Metallen, insbesondere ohne Schwermetalle, auszukommen. Weiter wünschenswert war es mit Einkomponentensystemen auszukommen. Damit ist gemeint, dass nur eine Art von Selbstheilungsmitteln in der Beschichtung vorliegt, also nicht etwa Katalysator einerseits und polymerisationsfähige Komponente andererseits. Weiterhin war nicht bekannt, wie Kapseln mit selbstheilenden Mitteln in industriellem Maßstab ohne Beschädigung in Beschichtungsmittel eingearbeitet werden konnten. Ebenso war nicht bekannt, wie solche kapselhaltigen Beschichtungsmittel mit üblichen, mechanische Belastungen mit sich bringenden Beschichtungsverfahren wie Spritzlackieren ohne nennenswerte Beschädigung der Kapseln verarbeitet werden können. Dies ist möglicherweise ein Grund dafür, dass es zur Zeit kein kommerziell erhältliches Selbstheilungslacksystem mit Mikrokapseln gibt. Die im Stand der Technik beschriebenen Ansätze zum Einsatz von Harnstoff-Formaldehyd-Mikrokapseln in selbstheilenden Beschichtungen befassen sich ausschließlich mit der Herstellung und Charakterisierung der Mikrokapseln sowie mit den Selbstheilungseigenschaften von Beschichtungen mit Mikrokapseln. Beschichtungen mit optisch anspruchsvollem Erscheinungsbild waren bislang mit trüben Harnstoff-Formaldehyd-Mikrokapseln nicht möglich.

Überraschend und für den Fachmann nicht vorhersehbar hat sich nun herausgestellt, dass ein Verfahren zur Herstellung transparenter Mikrokapseln umfassend die Abfolge folgender Verfahrensschritte: a) Herstellen einer Lösung von i) 0,1 bis 1,0 Gew.% Ammonium- und/oder Alkalimetallchlorid, ii) 0 bis 0,7 Gew.% eines aromatischen Alkohols gewählt unter den Dihydroxy- und/oder Trihydroxy-Benzolen, bevorzugt gewählt unter Resorcin, Pyrogallol und/oder Phloroglucin, besonders bevorzugt Resorcin, iii) 0,1 bis 3,5 Gew.%, bevorzugt 1,1 bis 3,5 Gew.%, einer Amin- oder Amidkomponente gewählt aus einem Amin oder Amid mit mindestens zwei Aminogruppen, bevorzugt Melamin, Diaminohexan, bzw. Harnstoff und/oder Cyanamid, besonders bevorzugt Harnstoff und iv) 0,3 bis 2,0 Gew.% eines Schutzkolloids, welches in Wasser löslich ist und die Öl in Wasser Emulsion stabilisiert, bevorzugt gewählt unter Polyvinylpyrrolidon (=PVP), Polyvinylalkohol (=PVA), Polyvinylacetat (=PVAc), Poly[1-(N-2-methyl-propanesulfonsäure) carbomylethylen] (=Poly AMPS), Gummi Arabicum und/oder Poly(Ethylene-alt-maleic anhydrid) (=EMA), besonders bevorzugt EMA in Wasser, wobei die Gesamtkonzentration der vorgenannten nichtwässrigen Bestandteile 1,5 bis 7,2 Gew.% beträgt, jeweils bezogen auf das Gesamtgewicht der Lösung, b) Zugabe von 0,02 bis 0,13 Gew.% einer Emulgatorkombination aus einem anionischen und einem nichtionischen Emulgator, besonders bevorzugt ist eine Kombination aus Natriumlaurylsulfaten und Alkyl-Aryl-Ethoxylaten, im Verhältnis 1:3 bis 3:1, bevorzugt im Verhältnis 1:2 bis 2:1, c) Einstellen des pH-Wertes der erhaltenen Lösung auf einen Wert im Intervall 2,5 bis 6, besonders bevorzugt auf 3 bis 4, d) gewünschtenfalls Zugabe eines Entschäumers gewählt unter Octanol und Decanol in einer Konzentration von 0 bis 0,6 Gew.-% bezogen auf das Gesamtgewicht der Zubereitung, e) Zugabe wenigstens eines hydrophoben Materials, wobei als hydrophobes Material lufttrocknende Alkydharze und/oder Öle verwendet wird, besonders bevorzugt Leinöl, ganz besonders bevorzugt unsikkativiertes Leinöl in einer Konzentration von 9 bis 42 Gew.% jeweils bezogen auf das Gesamtgewicht der Zubereitung, f) Zugabe von 0,5 bis 13,0 Gew.% einer Aldehydkomponente gewählt unter Formaldehyd, Glutaraldehyd und/oder Glyoxal, bevorzugt Formaldehyd, jeweils bezogen auf das
Gesamtgewicht der Zubereitung, g) Temperieren der erhaltenen Mischung auf 40 bis 70 °C, besonders bevorzugt auf 50 bis 60°C, jeweils über 1 bis 5 Stunden, besonders bevorzugt 3 bis 4 Stunden, jeweils unter Mischen, wobei die Bedingungen des Mischens so gewählt werden, dass sich zunächst eine Emulsion bildet, deren Tröpfchen eine zahlenmittlere Tröpfchengröße von 15 bis 350 µm, besonders bevorzugt 50 bis 80 µm aufweisen, h) Gewinnen der Mikrokapseln bevorzugt durch Filtrieren, Waschen und Trocknen sowie gewünschtenfalls Klassieren, den Übeln des Standes der Technik abhilft. Damit lassen sich transparente Mikrokapseln herstellen, die sich in transparenten Beschichtungsmitteln einsetzen lassen, ohne ihre optischen Eigenschaften zu beeinträchtigen. Demgegenüber weisen die Harnstoff-Formaldehyd-Kapseln des Standes der Technik ein trübes Kapselmaterial auf, was in un- bzw. leichtpigmentierten Beschichtungen schnell zur Trübung des Systems führt, was gerade bei optisch anspruchsvollen Lackierungen einen unerwünschten Effekt darstellt. Eine Sikkativierung ist nicht notwendig. Dadurch sind keine Schwermetalle enthalten und es kommt zu keiner Einfärbung des Lackes. Die erfindungsgemäßen Mikrokapseln sind aufgrund ihrer hohen Vernetzung undurchlässig (diffusionsgeschlossen), chemikalienbeständig, lichtecht, schwer brennbar, geruchlos und gegen schwache Säuren und Laugen, Lösemittel, Öle und Fette beständig. Erfindungsgemäße transparente Mikrokapseln weisen unter dem Lichtmikroskop bei 100 bis 300-facher Vergrößerung eine meist glatte, transparente Kapselwand mit klarer Kontur auf, die zum Teil den Blick in das Innere der Mikrokapsel erlaubt. Im Gegensatz zu nicht transparenten Mikrokapseln weisen die erfindungsgemäßen transparenten Mikrokapseln die optischen Eigenschaften einer transparenten Kugel auf: die Kapselwand ist gut zu erkennen, zum Teil kann der Untergrund durch die Mikrokapseln hindurch erkannt werden und es kommt zu Reflexionen auf der Oberseite der Mikrokapseln. Im Gegensatz dazu weisen nicht transparente Mikrokapseln eine unregelmäßige Kontur auf und der Blick ins Innere ist mit dem Mikroskop nicht möglich. Bestenfalls sind die nicht transparenten Mikrokapseln in einem geringen Maße durchscheinend. Die erfindungsgemäßen Mikrokapseln sind mechanisch stabil und die Einarbeitung der Mikrokapseln in Lacken mittels Dispermaten und auch die Spritzapplikation sind möglich. Trotzdem reißen die Kapseln bei einem auftretenden Riss der Beschichtung auf, so dass das Heilungsreagenz austreten kann und der Riss gefüllt und geheilt wird. Die erfindungsgemäßen Mikrokapseln sind neben dem Einsatz in Lacksystemen für den Innenbereich auch für den Einsatz im Außenbereich geeignet. Bislang gab es keine Mikrokapseln mit einer transparenten Optik. Gerade bei Holzbeschichtungsmitteln ist die Transparenz der Lacksysteme ein entscheidender Faktor. Die Einarbeitung von milchig-trüben Mikrokapseln, wie sie in der Literatur beschrieben sind, erzeugt bei transparenten bzw. wenig pigmentierten Systemen bei Beschichtungsmitteln für Holz und Holzwerkstoffe eine Trübung. Vorteilhaft ist weiterhin die Vielzahl an kommerziell erhältlichen Alkydharzen, welche je nach Anwendungsfall ausgesucht werden können. Die erfindungsgemäß hergestellten Mikrokapseln eignen sich besonders für Lacksysteme bei denen es auf optische Anforderungen (Glanz, Transparenz) in Verbindung mit einer Schutzfunktion ankommt. Beispiele dafür sind Beschichtungsmittel für Holz und Holzwerkstoffe im Außenbereich, die Möbellackierung und die Lackierung von korrosionsempfindlichen Bauteilen.

Erfindungsgemäß geeignete Schutzkolloide werden beispielsweise in Houben-Weyl, Methoden der organischen Chemie, Band XIV/1 Makromolekulare Stoffe, Georg Thieme Verlag, Stuttgart, 1961, S. 411 bis 420, ausführlich beschrieben: Geeignete neutrale Schutzkolloide sind beispielsweise Polyvinylalkohole, Polyalkylenglykole, Polysaccharide, Cellulose-, Stärke- und Gelatinederivate. Als anionische Schutzkolloide kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht. Geeignete kationische Schutzkolloide, sind beispielsweise die am Stickstoff protonierten und/oder alkylierten Derivate von N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Erfindungsgemäß geeignete Emulgatoren werden beispielsweise in Houben-Weyl, Methoden der organischen Chemie, Band XIV/1 Makromolekulare Stoffe, Georg Thieme Verlag, Stuttgart, 1961, S. 192 bis 208, beschrieben. Als verwendete Emulgatoren sind sowohl anionische als auch nichtionische Emulgatoren geeignet. Auch kationische Emulgatoren können eingesetzt werden, sind jedoch nicht bevorzugt. In erfindungsgemäßen Emulgatorkombinationen sind geeignete nichtionische Emulgatoren acrylaliphatische oder aliphatische nicht-ionische Emulgatoren, beispielsweise ethoxylierte Mono-, Di- und Trialkylphenole (Ethoxylierungsgrad: 3 bis 50, Alkylrest: C8 - C36) sowie Polyethylenoxid/Polypropylenoxid-Homo- und Copolymere. Gut geeignet sind z. B. Ethylenoxid/Propylenoxid-Blockcopolymere. Bevorzugt werden Ethoxylate langkettiger Alkanole (Alkylrest C1 - C30, mittlerer Ethoxylierungsgrad 5 bis 100) eingesetzt. Geeignete anionische Emulgatoren sind beispielsweise Alkali- und Ammoniumsalze von Alkylsulfaten (Alkylrest: C8-C22), von Schwefelsäurehalbestern ethoxylierter Alkanole (Ethoxylierungsgrad: 2 bis 50, Alkylrest C12 - C18) und ethoxylierter Alkylphenole (Ethoxylierungsgrad 3 bis 50, Alkylrest: C4 - C9), von Alkylsulfonsäuren (Alkylrest: C12-C18) und von Alkylarylsulfonsäuren (Alkylrest: C9 - C18). Weitere geeignete Emulgatoren finden sich in Houben-Weyl, Methoden der organische Chemie, Band XIV/1, Maromolekulare Stoffe, Georg-Thieme-Verlag, Stuttgart, 1961, S. 192-208. Als weitere anionische Emulgatoren sind ebenfalls Sulfobernsteinsäureester oder - halbester oder Amide mit C5 - C12-Alkyl- oder Cycloalkylgruppen in der Seitenkette oder auch Bis(phenylsulfonsäure)ether bzw. deren Alkali- oder Ammoniumsalze, die an einem oder beiden aromatischen Ringen eine C4 - C24-Alkylgruppe tragen, geeignet. Diese Verbindungen sind allgemein bekannt, z. B. aus US 4,269,749, und im Handel erhältlich, beispielsweise als Dowfax® 2A1 (Dow Chemical Company).

Geeignete kationenaktive Emulgatoren sind in der Regel einen C6- bis C18-Alkyl-, Aralkyl- oder heterocyclishcen Rest aufweisende primäre, sekundäre, tertiäre oder quartäre Ammoniumsalze, Alkanolammoniumsalze, Pyridiniumsalze, Imidazolinumsalze, Oxyzoliniumsalze, Morholiniumsalze, Thiazoliniumsalze sowie Salze von Aminoxiden, Chinoliniumsalze, Isochinoliniumsalze, Tropyliumsalze, Sulfoniumsalze und Phoshoniumsalze. Beispielhaft genannt seien Dodecylammoniumacetat oder das entsprechende Hydrochlorid, die Chloride oder Acetate der verschiedenen 2-(N,N,N-Timethylammonium)ethylparaffinsäureester, N-Cetylpyridiniumchlorid, N-Laurylpyridiniumsulfat sowie N-Cetyl-N,N,N-trimethylammoniumbrimid, N-Dodecyl N,N,N-trimethylammoniumbromid, N-Octyl-N,N,N-timethylammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981, und in McCutcheon's, Emulsifiers & Detergents, MC Publishing Company, Glen Rock, 1989. Selbstverständlich müssen im Falle der Verwendung von Gemischen grenzflächenaktiver Substanzen die Einzelkomponenten miteinander verträglich sein, was leicht durch Vorversuche überprüft werden kann.

Erfindungsgemäß geeignete lufttrocknende Alkydharze und/oder Öle werden beispielsweise in Ullmann's Encyclopedia of Industrial Chemistry, Release 2002, 6th Edition, im Kapitel Alkyd Resins von Frank N. Jones und im Kapitel Fats and Fatty Oils von Alfred Thomas beschrieben. Diese Verbindungen sind allgemein bekannt und im Handel erhältlich, beispielsweise als Alkydal® U 601 hv TBA (Fa. Viverso).

Es ist erfindungsgemäß bevorzugt, wenn das Verhältnis des Schutzkolloids zu hydrophoben Material 1 zu 17,5 bis 1 zu 35,0 beträgt. Besonders bevorzugt ist es, wenn das Verhältnis von Amin- oder Amidkomponente zu Aldehydkomponente 1 zu 0,5 bis 1 zu 5. beträgt. Als hydrophobes Material wird lufttrocknende Alkydharze und/oder Öle eingesetzt, besonders bevorzugt
Leinöl, ganz
besonders bevorzugt unsikkativiertes Leinöl. Es ist erfindungsgemäß bevorzugt, wenn als hydrophobes Material ein lufttrocknendes Alkydharz oder Öl mit einer Viskosität von 0,1 bis 20 Pas, gemessen mit einem Rheometer AR 1000-N der Firma TA-Instrument mit einem 4 cm Kegel und einem Spalt von 61 µm bei 5 Umdrehungen/s und 25 °C, verwendet wird. Besonders bevorzugt ist es, wenn als hydrophobes Material isocyanatmodifiziertes Alkydharz und/oder ein acryliertes Alkydharz verwendet wird. Zweierkombinationen der erfindungsgemäßen Schutzkolloide im Verhältnis 1:10 bis 10:1 sind besonders bevorzugt. Die Erhöhung der Menge an Poly(ethylen-alt-maleic anhydrid) (EMA) führt zu Mikrokapseln, welche eine besonders transparente Optik aufweisen. EMA wird bei der Herstellung der Mikrokapseln eigentlich als Stabilisator eingesetzt. Diese Erhöhung der Einsatzkonzentration an EMA beeinflusst neben der Optik auch die mechanischen Eigenschaften der Mikrokapseln in vorteilhafter Weise. Diese werden mit zunehmendem Gehalt an EMA weicher.

Die Erfindung umfasst auch transparente Mikrokapseln, erhältlich nach den erfindungsgemäßen Verfahren und Mikrokapseldispersionen, diese enthaltend. Mikrokapseldispersionen sind insbesondere Dispersionen von Mikrokapseln in Wasser, bevorzugt im Verhältnis 1:2 bis 2:1, besonders bevorzugt 1:1, die gegebenenfalls zusätzlich grenzflächenaktive Hilfsstoffe zur Verbesserung des Benetzungsverhaltens, besonders bevorzugt bindemittelhaltige oder bindemittelfreie polymere Netz- und Dispergieradditive für organische Feststoffe/Pigmente im Verhältnis 1:3 bis 1:8 bezogen auf die Mikrokapseln enthalten. Diese Verbindungen sind allgemein bekannt, z.B. aus DE 10236133 und im Handel erhältlich, beispielsweise als Disperbyk 2010, Fa. Byk, Pigmentverteiler A, Fa. BASF. Die Mikrokapseln können mit hydrophobem Material gefüllt sein, das ein Selbstheilungsreagenz, Flammschutzmittel, antimikrobielles Additiv, Duftstoff, Pestizid, Herbizid oder Insektizid ist. Solche erfindungsgemäßen transparenten Mikrokapseln weisen eine individuelle Versagenskraft zwischen 0,1 und 3,5 mN auf, gemessen mit einem mikroskop-modifizierten Mikroeindringhärtemessgerät vom Typ Fischerscope® HM2000 S mit einem planem Indentor und einer transparenten Platte. Die Erfindung umfasst auch oben beschriebene transparente Mikrokapseln, die mit einem Formaldehydfänger wie Harnstoff, Ethylenharnstoff, Melamin oder Ammoniak, bevorzugt Harnstoff nachbehandelt werden und Dispersionen, solche Mikrokapseln enthaltend. Dabei kann die Nachbehandlung vor oder nach der Einarbeitung ins Lacksystem erfolgen. Die Erfindung umfasst auch einen Anstrichstoff enthaltend erfindungsgemäße transparente Mikrokapseln. Bevorzugt ist es, wenn wenigstens 1 Gew.% und bis zu 15 Gew.%, besonders bevorzugt bis zu 12 Gew.%, ganz besonders bevorzugt bis zu 10 Gew.% Mikrokapseln enthalten sind. Besonders bevorzugt weist ein solcher Anstrichstoff einen prozentualen Erhalt der mittleren Transparenz der Beschichtung von 60 - 90 % bei Einarbeitung von 10 Gew.-% Mikrokapseln mit einem Kapseldurchmesser von 10-80 µm bei einer Trockenschichtstärke von 70 µm, gemessen mit einem UV VIS-Spektralphotometer Specord 200 der Firma Analytik Jena AG im Wellenlängenbereich 380 - 780 nm, auf. Die Erfindung umfasst auch Mikrokapseldispersion enthaltend eine oder mehrere erfindungsgemäße Mikrokapseln sowie ein Applikationsverfahren für erfindungsgemäße Anstrichstoffe, wobei der Anstrichstoff mittels konventionellem Tauchen, Streichen, Rollen, Walzen, Fluten, Gießen, Vakumat, Hochdruck-Zerstäuben, Hochrotations-Zerstäuben, Elektrostatisches-Zerstäuben, Airless-Zerstäuben, HVLP-Pistole, Airmix-Zerstäuben, oder Becherpistole appliziert wird.

Durch die nachstehenden Beispiele wird die vorliegende Erfindung detailliert erläutert, ohne den Anspruch zu erheben, das erfindungsgemäße technische Potential voll beschrieben zu haben.

### Beispiel 1:Herstellung von transparenten Kapseln

Es wurden 2,1 g EMA (Poly(ethylen-alt-maleic anhydrid)) in 100 ml destilliertem Wasser gelöst und auf 85 °C erhitzt. Anschließend wurde die EMA-Lösung auf Raumtemperatur abgekühlt. Es wurden 250 ml Wasser in einen 1000 ml-Dreihalskolben vorgelegt und die EMA-Lösung zugegeben. Unter Rühren wurden 6 g Harnstoff, 0,7 g Ammoniumchlorid und 0,55 g Resorcin zugefügt. Nach dem Lösen wurden 0,24 g einer Emulgatorkombination aus Alkyldiphenyloxiddisulfonat, z.B. Dowfax 2A1, Fa. Dow und Nonylphenolethoxylat, z.B. TERGITOL NP-30, Fa. Dow, im Verhältnis 1:1 zugegeben.

Anschließend wurde der pH-Wert zunächst mit Natronlauge auf mindestens 3,5 eingestellt und dann mit Salzsäure auf 3,0. Es wurden ca. 5 Tropfen 1-Octanol hinzugefügt. Dann wurden 58 g Alkydharz (Alkydal® U 601 hv TBA, Fa. Viverso) zugetropft. Es wurde weitere 10 Minuten bei 500 1/min gerührt bevor die Zugabe von 5,55 g reinem Formaldehyd erfolgte. Der Kolben wurde dann auf 60°C aufgeheizt und 3 Stunden bei dieser Temperatur gerührt. Nach der Verkapselung wurde das Produkt durch eine Vakuumfiltration aufgefangen und mit Isopropanol gewaschen. Anschließend wurde das unverkapselte Bindemittel mit Cyclohexan herausgelöst. Die entstandenen Mikrokapseln waren nach dem Waschen pulvrig und wurden für 24 Stunden zum vollständigen Trocknen in eine Kristallisationsschale gefüllt. Danach wurden die Mikrokapseln mittels Siebanalyse klassiert.

### Beispiel 2: Herstellung von transparenten Kapseln (nicht erfinderisch)

Es wurden 3 g EMA (Poly(ethylen-alt-maleic anhydrid) in 100 ml destilliertem Wasser gelöst und auf 85 °C erhitzt. Anschließend wurde die Lösung auf Raumtemperatur abgekühlt (EMA-Lsg.). Es wurden 250 ml Wasser in einen 1000 ml-Dreihalskolben vorgelegt und die EMA-Lösung zugegeben. Unter Rühren wurden 8,5 g Harnstoff, 1,35 g Ammoniumchlorid und 0,93 g Resorcin zugefügt. Nach dem Lösen wurden 0,38 g des Emulgators Alkyldiphenyloxiddisulfonat, z.B. Dowfax 2A1, Fa. Dow, zugegeben.

Anschließend wurde der pH-Wert zunächst mit Natronlauge auf mindestens 3,8 eingestellt und dann mit Salzsäure auf 3,65. Es wurden ca. 5 Tropfen 1-Octanol hinzugefügt. Dann wurden 84 g Alkydharz (Alkydal® U 601 hv TBA, Fa. Viverso) zugetropft. Es wurde weitere 10 Minuten bei 500 1/min gerührt bevor die Zugabe von 8,03 g reinem Formaldehyd erfolgte. Der Kolben wurde dann auf 48°C aufgeheizt und 5 Stunden bei dieser Temperatur gerührt. Nach der Verkapselung wurde das Produkt durch eine Vakuumfiltration aufgefangen und mit Isopropanol gewaschen. Anschließend wurde das unverkapselte Bindemittel mit Cyclohexan herausgelöst. Die entstandenen Mikrokapseln waren nach dem Waschen pulvrig und wurden für 24 Stunden zum vollständigen Trocknen in eine Kristallisationsschale gefüllt. Danach wurden die Mikrokapseln mittels Siebanalyse klassiert.

### Beispiel 3: Referenz, trübe Kapseln

Es wurden 2,4 g EMA (Poly(ethylen-alt-maleic anhydrid) in 100 ml destilliertem Wasser gelöst und auf 85 °C erhitzt. Anschließend wurde die Lösung auf Raumtemperatur abgekühlt (EMA-Lsg.). Es wurden 250 ml Wasser in einen 1000 ml-Dreihalskolben vorgelegt und die EMA-Lösung zugegeben. Unter Rühren wurden 7,9 g Harnstoff, 1,20 g Ammoniumchlorid und 0,83 g Resorcin zugefügt. Nach dem Lösen wurden 0,34 g einer Emulgatorkombination aus Alkyldiphenyloxiddisulfonat, z.B. Dowfax 2A1, Fa. Dow, und Nonylphenolethoxylat, z.B. TERGITOL NP-30, Fa. Dow, im Verhältnis 2:1 zugegeben.

Anschließend wurde der pH-Wert zunächst mit Natronlauge auf 6,2 eingestellt. Es wurden ca. 10 Tropfen 1-Octanol hinzugefügt. Dann wurden 78 g Alkydharz (Alkydal® U 601 hv TBA, Fa. Viverso) - zugetropft. Es wurde weitere 10 Minuten bei 500 1/min gerührt bevor die Zugabe von 7,2 g reinem Formaldehyd erfolgte. Der Kolben wurde dann auf 78°C aufgeheizt und 5 Stunden bei dieser Temperatur gerührt. Nach der Verkapselung wurde das Produkt durch eine Vakuumfiltration aufgefangen und mit Isopropanol gewaschen. Anschließend wurde das unverkapselte Bindemittel mit Cyclohexan herausgelöst. Es entstanden nur wenige Mikrokapseln, welche nach dem Waschen sehr klebrig waren. Das Material wurde für 24 Stunden zum Trocknen in eine Kristallisationsschale gefüllt, danach mittels Siebanalyse klassiert. Die Mikrokapseln waren trüb.

Die jeweils in den Beispielen 1 - 3 erstellten Kapseln wurden in einen Prüflack gemäß folgender Rezeptur eingearbeitet.

| Richtrezeptur des Anstrichstoffs: **Bestandteile** | **Gewichtsteil** |
|---|---|
| **Komponente 1** | |
| Mowilith LDM 7416 (Hersteller: Celanese Emulsions GmbH) | 740.0 |
| Ammoniak, 25 % | 2.0 |
| | |

| **Komponente 2** | |
|---|---|
| Wasser | 109.2 |
| Syloid ED5 (Hersteller: W. R. Grace & Co) | 15.0 |
| TEGO Foamex 805 / 24 % (Hersteller: Evonik Tego Chemie GmbH) | 15.0 |
| TEGO Foamex 810 / 100 % (Hersteller: Evonik Tego Chemie GmbH) | 5.0 |
| TMDD, 75% (in Ethylenglycol) | 3.0 |
| Dowanol DPnB | 20.0 |
| Methoxybutanol | 20.0 |
| Xanthan Gum | 0.5 |
| TAFIGEL PUR 60/40 (Hersteller: MÜNZING CHEMIE GMBH) | 5.0 |
| Benzisothiazolinon | 0.3 |
| | |

| **Komponente 3** | |
|---|---|
| Wasser | 25.0 |
| Lanco PE 1500 F (Hersteller: The Lubrizol Corporation) | 40.0 |

Komponente 2 wird separat dispergiert (Dissolver) und dann in Komponente 1 eingerührt. Die Komponenten 3 werden unter gutem Rühren dann nach und nach zugegeben. Dieser Prüflack wurde in geringfügig modifizierter Form nach - J. Prieto, J. Kiene: "Holzbeschichtung: Chemie und Praxis", Vinzentz Network, Hannover, 2007, Seite 247- Schemarezeptur, formuliert.

Bei der Einarbeitung von 10 Gew.-% Mikrokapseln mit einem Kapseldurchmesser von 10-80 µm in die angeführte Richtrezeptur bei einer Trockenschichtstärke von 70 µm, gemessen mit einem UV VIS-Spektralphotometer Specord 200 der Firma Analytik Jena AG im Wellenlängenbereich 380 - 780 nm, ergeben sich bei den Kapseln aus den Beispielen 1 bis 3 folgende mittlere Transparenzen:

| | Transparenz % |
|---|---|
| Beispiel 1 | 60 - 65 |
| Beispiel 2 | 70 - 75 |
| Beispiel 3 | maximal 35 |

### Beispiel 4 (Kapselsynthese mit Glutaraldehyd):

Es wurden 2,6 g Mowiol 4-88, Fa. Roth in 100 ml destilliertem Wasser gelöst und auf 70 °C erhitzt. Anschließend wurde die Lösung auf Raumtemperatur abgekühlt. Es wurden 250 ml Wasser in einen 1000 ml-Dreihalskolben vorgelegt und die PVA-Lösung zugegeben. Unter Rühren wurden 8,5 g Harnstoff, 1,35 g Ammoniumchlorid und 0,93 g Resorcin zugefügt. Nach dem Lösen wurden 0,80 g einer Emulgatorkombination aus Alkyldiphenyloxiddisulfonat, z.B. Dowfax 2A1, Fa. Dow, und Nonylphenolethoxylat, z.B. TERGITOL NP-30, Fa. Dow, im Verhältnis 1:1 zugegeben.

Anschließend wurde der pH-Wert zunächst mit Natronlauge auf mindestens 3,8 eingestellt und dann mit Salzsäure auf 3,65. Es wurden ca. 8 Tropfen 1-Octanol hinzugefügt. Dann wurden 84 g Alkydharz (Alkydal® U 601 hv TBA, Fa. Viverso) zugetropft. Es wurde weitere 10 Minuten bei 500 1/min gerührt, bevor 8,9 g reines Glutaraldehyd zugegeben wurde. Der Kolben wurde dann auf 50°C aufgeheizt und 4 Stunden bei dieser Temperatur gerührt.
Nach der Verkapselung wurde das Produkt durch eine Vakuumfiltration aufgefangen und mit Isopropanol gewaschen. Anschließend wurde das unverkapselte Bindemittel mit Cyclohexan herausgelöst. Die entstandenen Mikrokapseln waren nach dem Waschen pulvrig und wurden für 24 Stunden zum vollständigen Trocknen in eine Kristallisationsschale gefüllt. Danach wurden die Mikrokapseln mittels Siebanalyse klassiert.

## Patentansprüche

1. Verfahren zur Herstellung transparenter Mikrokapseln, umfassend die Abfolge folgender Verfahrensschritte:
a) Herstellen einer Lösung von
i) 0,1 bis 1,0 Gew.% Ammonium- und/oder Alkalimetallchlorid,
ii) höchstens 0,7 Gew.% eines aromatischen Alkohols gewählt unter den Dihydroxy- und/oder Trihydroxy-Benzolen,
iii) 0,1 bis 3,5 Gew.% einer Amin- oder Amidkomponente gewählt aus einem Amin oder Amid mit mindestens zwei Aminogruppen und
iv) 0,3 bis 2,0 Gew.% eines Schutzkolloids, welches in Wasser löslich ist und die Öl in Wasser Emulsion stabilisiert,
wobei die Gesamtkonzentration der vorgenannten nichtwässrigen Bestandteile 1,5 bis 7,2 Gew.% beträgt, jeweils bezogen auf das Gesamtgewicht der Lösung,
b) Zugabe von 0,02 bis 0,13 Gew.% einer Emulgatorkombination aus einem anionischen und einem nichtionischen Emulgator, im Verhältnis 1:3 bis 3:1,
c) Einstellen des pH-Wertes der erhaltenen Lösung auf einen Wert im Intervall 2,5 bis 6,
d) Zugabe von 9 bis 42 Gew.% wenigstens eines hydrophoben Materials, bezogen auf das Gesamtgewicht der Zubereitung, wobei als hydrophobes Material lufttrocknende Alkydharze und/oder Öle verwendet wird.
e) Zugabe von von 0,5 bis 13,0 Gew.% einer Aldehydkomponente gewählt unter Formaldehyd, Glutaraldehyd und/oder Glyoxal, jeweils bezogen auf das Gesamtgewicht der Zubereitung,
f) Temperieren der erhaltenen Mischung auf 40 bis 70 °C über 1 bis 5 Stunden unter Mischen, wobei die Bedingungen des Mischens so gewählt werden, dass sich zunächst eine Emulsion bildet, deren Tröpfchen eine zahlenmittlere Tröpfchengröße von 15 bis 350 µm aufweisen,
g) Gewinnen der Mikrokapseln.

2. Verfahren zur Herstellung transparenter Mikrokapseln nach Anspruch 1, umfassend die Abfolge folgender Verfahrensschritte:
a) wie Schritt a) nach Anspruch 1,
b) wie in Schritt b) nach Anspruch 1,
c) wie in Schritt c) nach Anspruch 1,
d) Zugabe eines Entschäumers, gewählt unter Octanol und Decanol in einer Konzentration von höchstens 0,6 Gew.-% bezogen auf das Gesamtgewicht der Zubereitung,
e) wie in Schritt d) nach Anspruch 1
f) wie in Schritt e) nach Anspruch 1
g) wie in Schritt f) nach Anspruch 1 und
h) wie in Schritt g) nach Anspruch 1.

3. Verfahren nach Anspruch 1 oder 2, **dadurch gekennzeichnet, dass** das Verhältnis des Schutzkolloids zu hydrophoben Material 1 zu 17,5 bis 1 zu 35,0 beträgt.

4. Verfahren nach einem der vorangehenden Ansprüche, **dadurch gekennzeichnet, dass** das Verhältnis von Amin- oder Amidkomponente zu Aldehydkomponente 1 zu 0,5 bis 1 zu 5. beträgt.

5. Verfahren nach einem der vorangehenden Ansprüche, **dadurch gekennzeichnet, dass** als hydrophobes Material ein lufttrocknendes Alkydharz mit einer Viskosität von 0,1 bis 20 Pa s gemessen mit einem Rheometer AR 1000-N der Firma TA-Instrument mit einem 4 cm Kegel und einem Spalt von 61 µm bei 5 Umdrehungen/s und 25 °C, verwendet wird.

6. Verfahren nach einem der vorangehenden Ansprüche, **dadurch gekennzeichnet, dass** als hydrophobes Material isocyanatmodifiziertes Alkydharz und/oder ein acryliertes Alkydharz verwendet wird.

7. Transparente Mikrokapseln erhältlich nach den Verfahren nach Anspruch 1 bis 6.

8. Transparente Mikrokapseln nach Anspruch 7, die mit hydrophobem Material gefüllt sind, das ein Selbstheilungsreagenz, Flammschutzmittel, antimikrobielles Additiv, Duftstoff, Pestizid, Herbizid oder Insektizid ist.

9. Transparente Mikrokapseln nach einem der Ansprüche 7 oder 8 **dadurch gekennzeichnet, dass** die individuelle Versagenskraft zwischen 0,1 und 3,5 mN liegt, gemessen mit einem mikroskop-modifizierten Mikroeindringhärtemessgerät vom Typ Fischerscope® HM2000 S mit einem planem Indentor und einer transparenten Platte.

10. Anstrichstoff, enthaltend transparente Mikrokapseln nach Anspruch 7, 8, oder 9.

11. Anstrichstoff nach Anspruch 10 mit einem prozentualen Erhalt der mittleren Transparenz der Beschichtung von 60 - 90 % bei Einarbeitung von 10 Gew.-% Mikrokapseln mit einem Kapseldurchmesser von 10-80 µm bei einer Trockenschichtstärke von 70 µm, gemessen mit einem UV VIS-Spektralphotometer Specord 200 der Firma Analytik Jena AG im Wellenlängenbereich 380 - 780 nm.

12. Mikrokapseldispersion enthaltend eine oder mehrere Mikrokapseln nach einem der Patentansprüche 7, 8, oder 9.

## Claims

1. Process for producing transparent microcapsules, comprising the sequence of the following process steps:
a) preparing a solution of
i) 0.1 to 1.0 wt% of ammonium chloride and/or alkali metal chloride,
ii) not more than 0.7 wt% of an aromatic alcohol selected from the dihydroxy- and/or trihydroxybenzenes,
iii) 0.1 to 3.5 wt% of an amine or amide component selected from an amine or amide having at least two amino groups and
iv) 0.3 to 2.0 wt% of a protective colloid which is soluble in water and stabilizes the oil-in-water emulsion,
the total concentration of the above non-aqueous constituents being 1.5 to 7.2 wt%, based in each case on the total weight of the solution,
b) adding 0.02 to 0.13 wt% of an emulsifier combination comprising an anionic and a nonionic emulsifier in a ratio of 1:3 to 3:1,
c) adjusting the pH of the resulting solution to a value in the 2.5 to 6 range,
d) adding 9 to 42 wt% of at least one hydrophobic material, based on the total weight of the preparation, the hydrophobic material used comprising air-drying alkyd resins and/or oils,
e) adding from 0.5 to 13.0 wt% of an aldehyde component selected from formaldehyde, glutaraldehyde and/or glyoxal, based in each case on the total weight of the preparation,
f) heating the resultant mixture at 40 to 70° C for 1 to 5 hours with mixing, the conditions of mixing being selected such that first of all an emulsion is formed whose droplets have a number-average droplet size of 15 to 350 µm,
g) recovering the microcapsules.

2. Process for producing transparent microcapsules according to Claim 1, comprising the sequence of the following process steps:
a) as step a) according to Claim 1,
b) as in step b) according to Claim 1,
c) as in step c) according to Claim 1,
d) adding a defoamer selected from octanol and decanol at a concentration of not more than 0.6 wt%, based on the total weight of the preparation,
e) as in step d) according to Claim 1,
f) as in step e) according to Claim 1,
g) as in step f) according to Claim 1 and
h) as in step g) according to Claim 1.

3. Process according to Claim 1 or 2, **characterized in that** the ratio of the protective colloid to hydrophobic material is 1:17.5 to 1:35.0.

4. Process according to any of the preceding claims, **characterized in that** the ratio of amine or amide component to aldehyde component is 1:0.5 to 1:5.

5. Process according to any of the preceding claims, **characterized in that** the hydrophobic material used comprises an air-drying alkyd resin having a viscosity of 0.1 to 20 Pa s as measured with an AR 1000-N rheometer from TA-Instrument with a 4 cm cone and a gap of 61 µm at 5 revolution/s and 25°C.

6. Process according to any of the preceding claims, **characterized in that** the hydrophobic material used comprises isocyanate-modified alkyd resin and/or an acrylated alkyd resin.

7. Transparent microcapsules obtainable by the processes according to Claim 1 to 6.

8. Transparent microcapsules according to Claim 7, filled with hydrophobic material which is a self-healing reagent, flame retardant, antimicrobial additive, fragrance, pesticide, herbicide or insecticide.

9. Transparent microcapsules according to either of Claims 7 and 8, **characterized in that** the individual failure force is between 0.1 and 3.5 mN, measured using a Fischerscope® HM2000 S microscope-modified micropenetration hardness measuring instrument having a planar indentor and a transparent plate.

10. Coating material comprising transparent microcapsules according to Claim 7, 8 or 9.

11. Coating material according to Claim 10 having a percentage retention of the average transparency of the coating of 60 - 90% on incorporation of 10 wt% of microcapsules having a capsule diameter of 10 - 80 µm at a dry film thickness of 70 µm, measured using a Specord 200 UV VIS spectrophotometer from Analytik Jena AG in the 380 - 780 nm wavelength range.

12. Microcapsule dispersion comprising one or more microcapsules according to any of Claims 7, 8 and 9.

## Revendications

1. Procédé servant à fabriquer des microcapsules transparentes, comprenant dans l'ordre suivant les étapes de procédé suivantes consistant à :
a) fabriquer une solution de
i) 0,1 à 1,0 % en poids de chlorure d'ammonium et/ou de chlorure de métal alcalin,
ii) au maximum 0,7 % en poids d'un alcool aromatique choisi parmi les benzènes dihydroxy et/ou trihydroxy,
iii) 0,1 à 3,5 % en poids d'une composante amine ou amide choisie parmi une amine ou un amide comprenant au moins deux groupes amino, et
iv) 0,3 à 2,0 % en poids d'un colloïde protecteur, qui est soluble dans l'eau et qui stabilise une émulsion huile dans eau,
dans lequel la concentration totale des constituants non aqueux susmentionnés s'élève à 1,5 à 7,2 % en poids, respectivement par rapport au poids total de la solution,
b) ajouter de 0,02 à 0,13 % en poids d'une combinaison d'émulsifiants composée d'un émulsifiant anionique et d'un émulsifiant non ionique selon un rapport allant de 1:3 à 3:1,
c) régler la valeur pH de la solution obtenue à une valeur située dans la fourchette allant de 2,5 à 6,
d) ajouter de 9 à 42 % en poids d'au moins un matériau hydrophobe par rapport au poids total de la préparation, dans lequel des résines alkydes séchant à l'air et/ou des huiles sont employées en tant que matériau hydrophobe,
e) ajouter de 0,5 à 13,0 % en poids d'un composant aldéhyde choisi parmi le formaldéhyde, le glutaraldéhyde et/ou le glyoxal, respectivement par rapport au poids total de la préparation,
f) réguler la température du mélange obtenu à 40 à 70 °C pendant 1 à 5 heures en mélangeant, dans lequel
les conditions du mélange sont choisies de telle sorte que se forme dans un premier temps une émulsion, dont des gouttelettes présentent une moyenne en nombre de la taille de gouttelettes allant de 15 à 350 µm,
g) obtenir des microcapsules.

2. Procédé servant à fabriquer des microcapsules transparentes selon la revendication 1, comprenant dans l'ordre suivant les étapes de procédé qui suivent :
a) identique à l'étape a) selon la revendication 1 ;
b) identique à l'étape b) selon la revendication 1 ;
c) identique à l'étape c) selon la revendication 1 ;
d) ajouter un agent antimousse choisi parmi l'octanol et le décanol en une concentration de maximum 0,6 % en poids par rapport au poids total de la préparation ;
e) identique à l'étape d) selon la revendication 1 ;
f) identique à l'étape e) selon la revendication 1 ;
g) identique à l'étape f) selon la revendication 1 et ;
h) identique à l'étape g) selon la revendication 1.

3. Procédé selon la revendication 1 ou 2, **caractérisé en ce que** le rapport entre le colloïde protecteur et le matériau hydrophobe va de 1:17,5 à 1:35,0.

4. Procédé selon l'une quelconque des revendications précédentes, **caractérisé en ce que** le rapport entre la composante d'amine ou d'amide par rapport à la composante aldéhyde va de 1:0,5 à 1:5.

5. Procédé selon l'une quelconque des revendications précédentes, **caractérisé en ce qu'**est employée en tant que matériau hydrophobe une résine alkyde séchant l'air présentant une viscosité allant de 0,1 à 20 Pa s mesurée avec un rhéomètre AR 1000-N de la société TA-Instrument avec un cône de 4 cm et une fente de 61 µm pour 5 tours/s et à 25 °C.

6. Procédé selon l'une quelconque des revendications précédentes, **caractérisé en ce qu'**est employée en tant que matériau hydrophobe une résine alkyde modifiée à l'isocyanate et/ou une résine alkyde acrylée.

7. Microcapsules transparentes pouvant être obtenues selon les procédés selon la revendication 1 à 6.

8. Microcapsules transparentes selon la revendication 7, qui sont remplies d'un matériau hydrophobe, qui est un réactif d'auto-guérison, des produits retardateurs de flammes, un additif antimicrobien, un parfum, un pesticide, un herbicide ou un insecticide.

9. Microcapsules transparentes selon l'une quelconque des revendications 7 ou 8, **caractérisées en ce que** la force de défaillance individuelle est comprise entre 0,1 et 3,5 mN, mesurée à un appareil de mesure de dureté de micropénétration du type Fischerscope® HM2000 S pourvu d'un poinçon de sertissage plan et d'une plaque transparente.

10. Peinture, contenant des microcapsules transparentes selon la revendication 7, 8 ou 9.

11. Peinture selon la revendication 10 présentant une obtention en pourcentage de la transparence moyenne du revêtement de 60 - 90 % lors de l'incorporation de 10 % en poids de microcapsules présentant un diamètre de capsule de 10 - 80 µm pour une épaisseur de couche sèche de 70 µm, mesurée avec un photomètre spectral VIS UV Specord 200 de la société Analytik Jena AG dans la plage de longueurs d'ondes de 380 - 780 nm.

12. Dispersion de microcapsules contenant une ou plusieurs microcapsules selon l'une quelconque des revendications 7, 8 ou 9.
